# EUROPEAN PATENT APPLICATION

(11) **EP 4 637 256 A1**
(43) Date of publication of application: **22.10.2025**
(21) Application number: 23902557.0
(22) Date of filing: 06.12.2023
(51) Int. Cl.: H04W 76/11

(54) **CONNECTION INTERACTION METHOD, COMMUNICATION DEVICE, STORAGE MEDIUM, AND PROGRAM PRODUCT**

(30) Priority: 15.12.2022 CN 202211618630
(71) Applicant: ZTE Corporation, Shenzhen, Guangdong 518057 (CN)
(72) Inventor: NIU, Xiaobing, Shenzhen, Guangdong 518057 (CN)
(74) Representative: Vossius & Partner Patentanwälte Rechtsanwälte mbB
(86) International application number: PCT/CN2023/136791
(87) International publication number: WO 2024/125360

(57) **Abstract**

Embodiments of this application provide a connection interaction method, a communication device, a storage medium, and a program product. The connection interaction method includes: sending, by a first controller, a connection creation request carrying a boundary resource identifier to a second controller; then, establishing, by the second controller, a connection according to the boundary resource identifier; subsequently, generating, by the second controller, a connection establishment success message carrying the boundary resource identifier, and sending the connection establishment success message to the first controller; and finally, determining, by the first controller, a successful connection establishment according to the boundary resource identifier.

## Description

### CROSS-REFERENCE TO RELATED APPLICATION(S)

This application claims priority to Chinese Patent Application No. 202211618630.6, filed on December 15, 2022, which is incorporated by reference in its entirety.

### FIELD

Embodiments of this application relate to the field of communication technology, and in particular, to a connection interaction method, a communication device, a storage medium, and a program product.

### BACKGROUND

In the related art, a management control continuum (MCC) integrates a management function and a control function which are essentially the same to achieve unified management and control over transmission resources, providing comprehensive management and control services to upper-layer users. Correspondingly, a software defined networking (SDN) controller, an element management system (EMS), a network management system (NMS), and a control plane are all instances of a management and control system. Functional modules within the management and control system provide functional services through an interface.

In a cross-layer management and control system or a peer-to-peer management and control system, a client-layer and server-layer relationship is often formed between a plurality of controllers. Each client-layer controller can directly control forwarding-plane resources or control resources provided by server-layer controllers. For the resources provided by the server-layer controllers, the client-layer controllers do not exercise direct control. Instead, when there is a need to use these resources, the client-layer controllers interact with the server-layer controllers to use these resources.

However, in the current cross-layer management and control system, a process and an interface for initiating cross-layer connection interactions by the client-layer controllers are not sufficiently clear. Moreover, in the current peer-to-peer management and control system, a process for establishing a connection between two peer controllers remains ambiguous. Consequently, in the current cross-layer management and control system and the peer-to-peer management and control system, the capability to establish connections between the controllers is weak, making it challenging to achieve better system scheduling for a connection establishment.

### SUMMARY

Embodiments of this application provide a connection interaction method, a communication device, a storage medium, and a program product, to enhance a connection establishment capability within multi-management and control systems and support system scheduling for a connection establishment across a plurality of server-layer controllers in the multi-management and control systems.

In a first aspect, an embodiment of this application provides a connection interaction method including: sending, by a first controller, a connection creation request carrying a boundary resource identifier to a second controller, for causing the second controller to establish a connection according to the boundary resource identifier; and determining a successful connection establishment when the first controller receives a connection establishment success message fed back by the second controller, wherein the connection establishment success message carries the boundary resource identifier.

In a second aspect, an embodiment of this application provides a connection interaction method including: receiving, by a second controller, a connection creation request carrying a boundary resource identifier that is sent by a first controller, and establishing a connection according to the boundary resource identifier; and generating, by the second controller, a connection establishment success message carrying the boundary resource identifier, and sending the connection establishment success message to the first controller, for causing the first controller to determine a successful connection establishment according to the boundary resource identifier.

In a third aspect, an embodiment of this application provides a communication device, including at least one processor and at least one memory for storing at least one program. The at least one program, when run by the at least one processor, performs the connection interaction method according to the first aspect or the second aspect.

In a fourth aspect, an embodiment of this application provides a computer-readable storage medium, having a processor-executable program stored therein. The processor-executable program, when run by a processor, implements the connection interaction method according to the first aspect or the second aspect.

In a fifth aspect, an embodiment of this application provides a computer program product, including a computer program or a computer instruction. The computer program or the computer instruction is stored in a computer-readable storage medium. A processor of a computer device reads the computer program or the computer instruction from the computer-readable storage medium. The processor executes the computer program or the computer instruction to cause the computer device to perform the connection interaction method according to the first aspect or the second aspect.

According to the connection interaction method, the communication device, and the storage medium provided in the embodiments of this application, in the embodiments of this application, the first controller sends the connection creation request carrying the boundary resource identifier to the second controller; then, the second controller establishes the connection according to the boundary resource identifier; subsequently, the second controller generates the connection establishment success message carrying the boundary resource identifier and sends the connection establishment success message to the first controller; and finally, the first controller determines the successful connection establishment according to the boundary resource identifier. In the embodiments of this application, a cross-layer connection interaction method between the first controller and the second controller is clarified, thereby enhancing a connection establishment capability within multi-management and control systems and supporting system scheduling for connection establishment across a plurality of server-layer controllers in the multi-management and control systems.

### BRIEF DESCRIPTION OF THE DRAWINGS

FIG. 1 is a schematic diagram of an implementation environment for performing a connection interaction method according to an embodiment of this application;
FIG. 2 is a flowchart of a connection interaction method performed by a first controller according to an embodiment of this application;
FIG. 3 is a detailed flowchart of a first controller sending a connection creation request carrying a boundary resource identifier to a second controller according to an embodiment of this application;
FIG. 4 is a detailed flowchart of determining a successful connection establishment between corresponding starting and ending subnetwork points based on a boundary resource identifier according to an embodiment of this application;
FIG. 5 is a flowchart of concatenating connections between a plurality of starting and ending subnetwork points according to an embodiment of this application;
FIG. 6 is a flowchart of a connection interaction method performed by a second controller according to an embodiment of this application;
FIG. 7 is a detailed flowchart of a second controller receiving a connection creation request carrying a boundary resource identifier sent by a first controller according to an embodiment of this application;
FIG. 8 is a detailed flowchart of determining starting and ending subnetwork points according to a boundary resource identifier and establishing a connection between the starting and ending subnetwork points according to an embodiment of this application;
FIG. 9 is a schematic diagram of a component interaction flow in a connection establishment process in a management and control system according to an embodiment of this application;
FIG. 10 is a schematic diagram of an interaction flow between upper-layer controller components and lower-layer controller components in a cross-layer SDN controller architecture according to an embodiment of this application;
FIG. 11 is a schematic diagram of an interaction flow between a plurality of server-layer controllers and an upper-layer controller in a cross-layer SDN controller architecture according to an embodiment of this application; and
FIG. 12 is a schematic diagram of a connection creation interaction flow in SDN controller peer-peer according to an embodiment of this application.

### DETAILED DESCRIPTION OF EMBODIMENTS

In order to provide a clearer understanding of the objectives, technical solutions, and advantages of this application, this application is further described in detail in conjunction with accompanying drawings and embodiments below. It should be understood that the specific embodiments described herein are merely used for explaining this application rather than limiting this application.

It should be noted that although functional modules are divided in a schematic diagram of an apparatus and a logical sequence is illustrated in a flowchart, in certain cases, illustrated or described steps may be performed in a way different from module division within the apparatus or in a sequence different from the sequence in the flowchart. The terms such as "first" and "second" in the specification, the claims, and the above-mentioned accompanying drawings are used for distinguishing similar objects but not necessarily used for describing particular order or sequence.

In the embodiments of this application, the terms such as "further", "exemplarily", or "optionally" are used to present examples, illustrations, or explanations, and should not be construed as being more preferable or advantageous compared to other embodiments or design solutions. The use of the terms such as "further", "exemplarily", or "optionally" is intended to present relevant concepts in a specific manner.

In some cases, a management control continuum (MCC) integrates a management function and a control function which are essentially the same to achieve unified management and control over transmission resources, providing comprehensive management and control services to upper-layer users. Correspondingly, a software defined networking (SDN) controller, an element management system (EMS), a network management system (NMS), and a control plane are all instances of a management and control system. Functional modules within the management and control system provide functional services through an interface.

Dynamic connection scheduling is a fundamental function of the management and control system. In the management and control system, an interaction sequence for connection establishment involves corresponding components including: a network call controller (NCC), a connection controller (CC), a link resources manager (LRM), a termination and adaptation performer (TAP) component, directory Services (DSs), as well as forwarding-plane network elements.

Resources in a forwarding plane (e.g., a timeslot and a bandwidth) need to be converted into resources manageable by the management and control system. Forwarding-plane resources are represented by a forwarding point (FP) or a forwarding end point (FwEP), while resources utilized by the management and control system are denoted by a subnetwork point (SNP). A relationship between FP/FwEP and SNP is managed by a TAP module, which may bind a single SNP to an FP/FwEP or a plurality of SNPs to a single FP/FwEP, thereby indicating shared usage of the FP/FwEP resources by the plurality of SNPs. In other words, connections maintained by the management and control system, from a management and control perspective, utilize a series of SNPs (including the starting and ending SNPs), and from a forwarding-plane perspective, utilize FP/FwEP resources within the forwarding-plane network elements.

In a hierarchical architecture of SDN controllers, a client layer/server layer relationship is formed between upper-layer and lower-layer controllers.

Each controller may directly control the forwarding-plane resources or control resources provided by server-layer controllers. For the resources provided by a server-layer controller, a client-layer controller does not directly control these resources but rather uses these resources through cross-layer interactions when these resources need to be used.

The server-layer controller provides resources to the client-layer controller through a virtual network, and these resources include a subnetwork point pool (SNPP) and a subnetwork point pool link (SNNP link).

The client-layer controller interacts with the server-layer controller through a server context (ServerContext) and a client context (ClientContext).

However, in a current cross-layer management and control system, a process and an interface for initiating cross-layer connection interactions by a client-layer controller are not sufficiently clear. Moreover, in a current peer-to-peer management and control system, a process for establishing a connection between two peer controllers remains ambiguous. Consequently, in the current cross-layer management and control system and the peer-to-peer management and control system, the capability to establish connections between the controllers is weak, making it challenging to achieve better system scheduling for connection establishment.

Based on this, this application provides a connection interaction method, a communication device, a storage medium, and a program product, to enhance a connection establishment capability within multi-management and control systems and support system scheduling for connection establishment across a plurality of server-layer controllers in the multi-management and control systems.

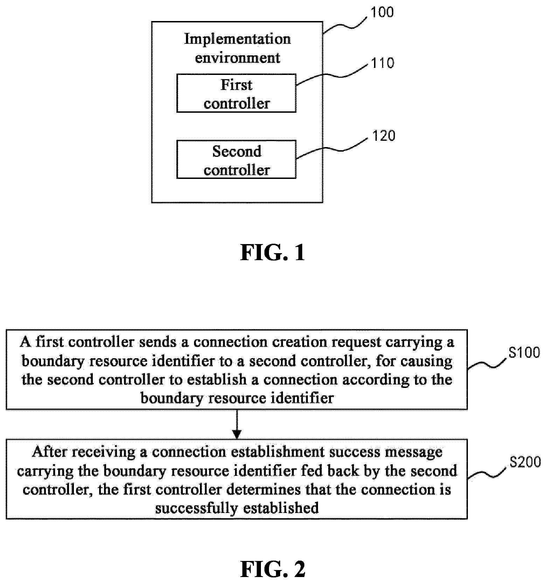

FIG. 1 illustrates a schematic diagram of an implementation environment for performing a connection interaction method according to an embodiment of this application. The implementation environment 100 includes a first controller 110 and a second controller 120, which are connected communicatively.

In an embodiment, the first controller 110 and the second controller 120 may be controllers within a cross-layer management and control system. That is, the first controller 110 and the second controller 120 form a client-layer and server-layer relationship as upper-layer and lower-layer controllers.

In an embodiment, the first controller 110 and the second controller 120 may be controllers within a peer-to-peer management and control system. That is, the first controller 110 and the second controller 120 form a peer-to-peer relationship rather than the upper-layer and lower-layer controllers.

The technical solutions in the embodiments of this application may be applied to various communication systems, such as a wideband code division multiple access (WCDMA) mobile communication system, an evolved universal terrestrial radio access network (E-UTRAN) system, a next generation radio access network (NG-RAN) system, a long term evolution (LTE) system, a worldwide interoperability for microwave access (WiMAX) communication system, a 5th generation (5G) system like a new radio access technology (NR), and a future communication system like a 6G system.

The technical solutions in the embodiments of this application may be applied to various communication technologies, such as microwave communication, optical wave communication, and millimeter-wave communication. The embodiments of this application do not limit adopted specific technologies and device forms.

Based on the implementation environment of the above-mentioned embodiments, the following provides various embodiments of the connection interaction method performed by the first controller in the embodiments of this application.

FIG. 2 is a flowchart of a connection interaction method performed by a first controller according to an embodiment of this application. As shown in FIG. 2, the connection interaction method may include, but is not limited to, step S100 and step S200.

Step S100: A first controller sends a connection creation request carrying a boundary resource identifier to a second controller, for causing the second controller to establish a connection according to the boundary resource identifier.

Step S200: After receiving a connection establishment success message carrying the boundary resource identifier fed back by the second controller, the first controller determines that the connection is successfully established.

In an embodiment, after the first controller parses corresponding routing information according to a connection establishment request initiated by a client, if a domain correspondingly traversed by the routing information includes a domain provided by the second controller, the first controller sends a connection creation request to the second controller. The connection creation request carries a boundary resource identifier (BRI), and the boundary resource identifier (BRI) corresponds to a starting SNP and an ending SNP within the second controller; then, after receiving the connection creation request, the second controller determines starting and ending subnetwork points according to the boundary resource identifier (BRI) in the connection creation request, and establishes a connection between the starting and ending subnetwork points; subsequently, the second controller generates a connection establishment success message and sends the connection establishment success message to the first controller, where the connection establishment success message carries a boundary resource identifier (BRI); and finally, after receiving the connection establishment success message, the first controller can determine that the connection between the corresponding starting and ending subnetwork points is successfully established according to the boundary resource identifier (BRI) in the connection establishment success message, thereby allowing the first controller to interactively use forwarding-plane resources corresponding to the second controller through a cross-controller method.

In an embodiment, the first controller and the second controller may have the client-layer and server-layer relationship or the peer-to-peer relationship.

In an embodiment, the first controller may perform a connection interaction with one second controller, two second controllers, or even more second controllers.

In the embodiments of this application, a cross-layer connection interaction method between the first controller and the second controller is clarified, thereby enhancing a connection establishment capability within multi-management and control systems and supporting system scheduling for connection establishment across a plurality of server-layer controllers in the multi-management and control systems.

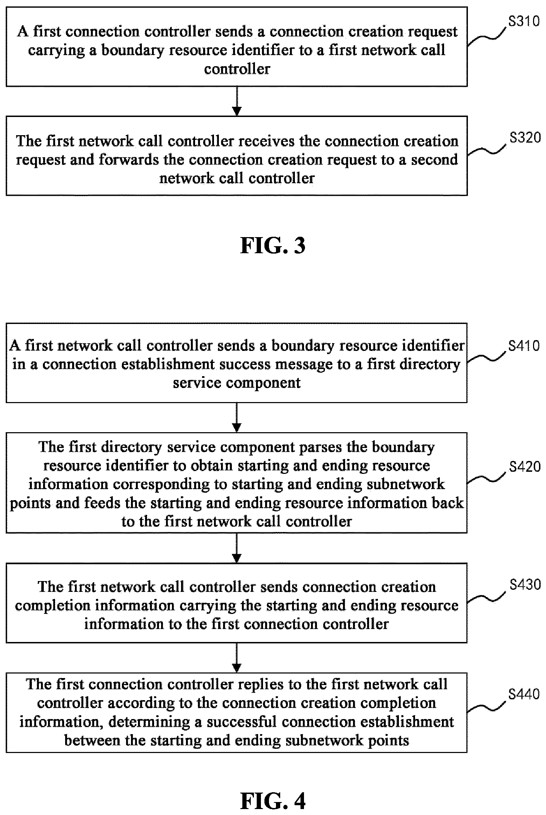

FIG. 3 is a detailed flowchart of a first controller sending a connection creation request carrying a boundary resource identifier to a second controller according to an embodiment of this application. The first controller includes a first connection controller and a first network call controller, which are connected communicatively. The second controller includes a second network call controller. The above-mentioned step S100 of the first controller sending the connection creation request carrying the boundary resource identifier to the second controller may include, but is not limited to, step S310 and step S320.

Step S310: The first connection controller sends a connection creation request carrying a boundary resource identifier to the first network call controller.

Step S320: The first network call controller receives the connection creation request and forwards the connection creation request to the second network call controller.

In an embodiment, after determining that a domain correspondingly traversed by routing information includes a domain provided by the second controller, the first connection controller generates a connection creation request, where the connection creation request carries a boundary resource identifier (BRI); then, the first connection controller sends the connection creation request carrying the boundary resource identifier (BRI) to the first network call controller; and subsequently, the first network call controller forwards the connection creation request carrying the boundary resource identifier (BRI) to the second network call controller.

In an embodiment, the connection creation request may also carry first identifier information. The first identifier information is used to represent identifier information of the server context. The corresponding server context provides routing domain information where the connection creation request is located, including a virtual network resource. The second controller can acquire a specific server context according to the first identifier information.

FIG. 4 is a detailed flowchart of determining a successful connection establishment between corresponding starting and ending subnetwork points based on a boundary resource identifier according to an embodiment of this application. The first controller further includes a first directory service component. The determination of a successful connection establishment in step S200 above may include, but is not limited to, steps S410, S420, S430, and S440.

Step S410: The first network call controller sends the boundary resource identifier in the connection establishment success message to the first directory service component.

Step S420: The first directory service component parses the boundary resource identifier to obtain starting and ending resource information corresponding to the starting and ending subnetwork points and feeds the starting and ending resource information back to the first network call controller.

Step S430: The first network call controller sends connection creation completion information carrying the starting and ending resource information to the first connection controller.

Step S440: The first connection controller replies to the first network call controller according to the connection creation completion information, determining the successful connection establishment between the starting and ending subnetwork points.

In an embodiment, after the second controller determines the starting and ending subnetwork points according to the boundary resource identifier (BRI) in the connection creation request and establishes the connection between the starting and ending subnetwork points, the first network call controller receives the connection establishment success message carrying the boundary resource identifier (BRI) sent by the second network call controller; then, the first network call controller parses the boundary resource identifier (BRI) through the first directory service component to obtain the starting and ending resource information corresponding to the connected starting and ending subnetwork points; subsequently, the first network call controller generates the connection creation completion information carrying the starting and ending resource information; and finally, the first connection controller performs feedback to the first network call controller according to the connection creation completion information, and informs about the successful connection establishment between the starting and ending subnetwork points.

In an embodiment, the connection establishment success message may also carry second identifier information, where the second identifier information is used to represent identifier information of the client context. The first controller can acquire a specific client context (ClientContext) according to the second identifier information.

In an embodiment, the connection establishment success message may also carry first identifier information, where the first identifier information is used to represent the identifier information of the server context. Since the client context is in one-to-one correspondence with the server context, the corresponding client context (ClientContext) may be determined according to the first identifier information.

In an embodiment, the connection establishment success message may also carry the first identifier information and the second identifier information, where the first identifier information is used to represent the identifier information of the server context, and the second identifier information is used to represent the identifier information of the client context. Specifically, since the client context is in one-to-one correspondence with the server context, the corresponding client context (ClientContext) may be determined according to the first identifier information; or, the first controller can acquire a specific client context (ClientContext) according to the second identifier information.

In an embodiment, the first network call controller communicates with the second network call controller based on the server context.

In an embodiment, the second network call controller communicates with the first network call controller based on the client context.

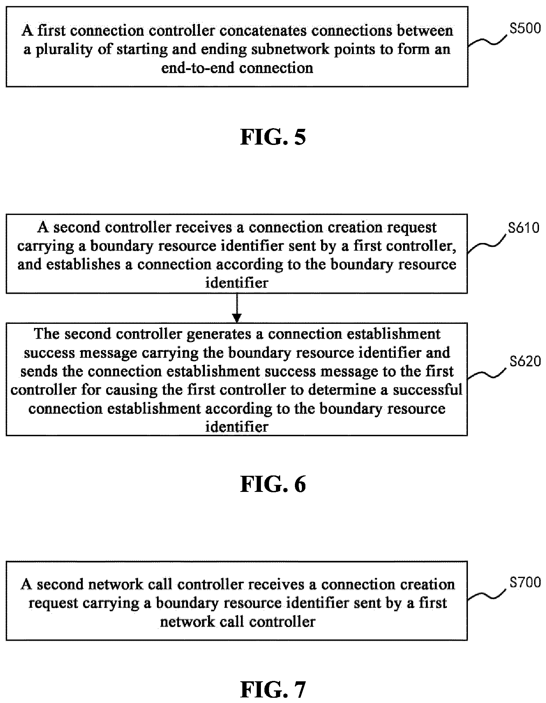

FIG. 5 is a flowchart of concatenating connections between a plurality of starting and ending subnetwork points according to an embodiment of this application. In a case where there are connections between the plurality of starting and ending subnetwork points, after step S200 above, the connection interaction method may further include, but is not limited to, step S500.

Step S500: The first connection controller concatenates the connections between the plurality of starting and ending subnetwork points to form an end-to-end connection.

In an embodiment, the first connection controller establishes connections segment by segment according to routing information and a domain traversed by a route. After these connections are established, the first connection controller concatenates or stitches these connections together to form the end-to-end connection.

In an embodiment, the first connection controller may concatenate a connection between starting and ending subnetwork points corresponding to the first controller and a connection between starting and ending subnetwork points corresponding to one second controller to form an end-to-end connection.

In an embodiment, the first connection controller may concatenate a connection between the starting and ending subnetwork points corresponding to the first controller and connections between a plurality of starting and ending subnetwork points corresponding to a plurality of second controllers to form an end-to-end connection.

In an embodiment, the first connection controller may concatenate the connections between the plurality of starting and ending subnetwork points corresponding to the plurality of second controllers to form an end-to-end connection.

Based on the connection interaction method performed by the first controller according to any one of the above-mentioned embodiments, the following provides various embodiments of a connection interaction method performed by the second controller in the embodiments of this application.

FIG. 6 is a flowchart of a connection interaction method performed by a second controller according to an embodiment of this application. As shown in FIG. 6, the connection interaction method may include, but is not limited to, steps S610 and S620.

Step S610: The second controller receives a connection creation request carrying a boundary resource identifier sent by a first controller, and establishes a connection according to the boundary resource identifier.

Step S620: The second controller generates a connection establishment success message carrying the boundary resource identifier and sends the connection establishment success message to the first controller for causing the first controller to determine a successful connection establishment according to the boundary resource identifier.

In an embodiment, after the first controller parses corresponding routing information according to a connection establishment request initiated by a client, if a domain correspondingly traversed by the routing information includes a domain provided by the second controller, the first controller sends a connection creation request to the second controller. The connection creation request carries a boundary resource identifier (BRI), and the boundary resource identifier (BRI) corresponds to a starting SNP and an ending SNP within the second controller; then, after receiving the connection creation request, the second controller determines starting and ending subnetwork points according to the boundary resource identifier (BRI) in the connection creation request, and establishes a connection between the starting and ending subnetwork points; subsequently, the second controller generates a connection establishment success message and sends the connection establishment success message to the first controller, where the connection establishment success message carries a boundary resource identifier (BRI); and finally, after receiving the connection establishment success message, the first controller can determine that the connection between the corresponding starting and ending subnetwork points is successfully established according to the boundary resource identifier (BRI) in the connection establishment success message, thereby allowing the first controller to interactively use forwarding-plane resources corresponding to the second controller through a cross-controller method.

In this embodiment of this application, a cross-layer connection interaction method between the first controller and the second controller is clarified, thereby enhancing a connection establishment capability within multi-management and control systems and supporting system scheduling for connection establishment across a plurality of server-layer controllers in the multi-management and control systems.

In an embodiment, the first controller and the second controller may have a client-layer and server-layer relationship or a peer-to-peer relationship.

In an embodiment, the first controller may perform a connection interaction with one second controller, two second controllers, or even more second controllers.

In an embodiment, the connection creation request may also carry first identifier information. The first identifier information is used to represent identifier information of a server context. The corresponding server context provides routing domain information where the connection creation request is located, including a virtual network resource. The second controller can acquire a specific server context (ServerContext) according to the first identifier information.

In an embodiment, the connection establishment success message may also carry second identifier information, where the second identifier information is used to represent identifier information of a client context. The first controller can acquire a specific client context (ClientContext) according to the second identifier information.

In an embodiment, the connection establishment success message may also carry the first identifier information, where the first identifier information is used to represent the identifier information of the server context. Since the client context is in one-to-one correspondence with the server context, the corresponding client context (ClientContext) may be determined according to the first identifier information.

In an embodiment, the connection establishment success message may also carry the first identifier information and the second identifier information, where the first identifier information is used to represent the identifier information of the server context, and the second identifier information is used to represent the identifier information of the client context. Specifically, since the client context is in one-to-one correspondence with the server context, the corresponding client context (ClientContext) may be determined according to the first identifier information; or, the first controller can acquire a specific client context (ClientContext) according to the second identifier information.

In an embodiment, a first network call controller communicates with a second network call controller based on the server context.

In an embodiment, the second network call controller communicates with the first network call controller based on the client context.

FIG. 7 is a detailed flowchart of a second controller receiving a connection creation request carrying a boundary resource identifier sent by a first controller according to an embodiment of this application. The second controller includes a second network call controller, and the first controller includes a first network call controller. The above-mentioned step S610 of the second controller receiving the connection creation request carrying the boundary resource identifier sent by the first controller may include, but is not limited to, step S700.

Step S700: The second network call controller receives the connection creation request carrying the boundary resource identifier sent by the first network call controller.

In an embodiment, after determining that a domain correspondingly traversed by routing information includes a domain provided by the second controller, the first connection controller generates a connection creation request, where the connection creation request carries a boundary resource identifier (BRI); then, the first connection controller sends the connection creation request carrying the boundary resource identifier (BRI) to the first network call controller; and subsequently, the first network call controller forwards the connection creation request carrying the boundary resource identifier (BRI) to the second network call controller, and accordingly, the second network call controller correspondingly receives the connection creation request carrying the boundary resource identifier sent by the first network call controller.

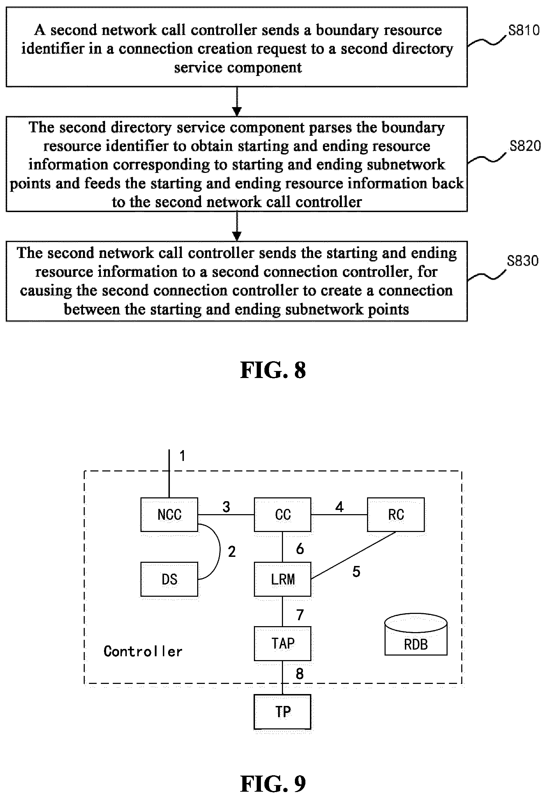

FIG. 8 is a detailed flowchart of determining starting and ending subnetwork points according to a boundary resource identifier and establishing a connection between the starting and ending subnetwork points according to an embodiment of this application. The second controller further includes a second connection controller and a second directory service component, both of which are connected communicatively with the second network call controller. The above-mentioned step S610 of establishing a connection according to the boundary resource identifier may include, but is not limited to, steps S810, S820, and S830.

Step S810: The second network call controller sends the boundary resource identifier in the connection creation request to the second directory service component.

Step S820: The second directory service component parses the boundary resource identifier to obtain starting and ending resource information corresponding to the starting and ending subnetwork points and feeds the starting and ending resource information back to the second network call controller.

Step S830: The second network call controller sends the starting and ending resource information to the second connection controller, for causing the second connection controller to create a connection between the starting and ending subnetwork points.

In an embodiment, after receiving the connection creation request carrying the boundary resource identifier sent by the first network call controller, the second network call controller parses the boundary resource identifier (BRI) through the second directory service component to obtain the starting and ending resource information corresponding to the starting and ending subnetwork points; then, the second network call controller sends the starting and ending resource information to the second connection controller; and finally, the second connection controller establishes the connection between the starting and ending subnetwork points according to the starting and ending resource information.

Based on the connection interaction method performed by the first controller or the second controller according to any one of the above-mentioned embodiments, the following provides a plurality of specific embodiments of the connection interaction method in this application.

Embodiment 1: As shown in FIG. 9, FIG. 9 is a schematic diagram of a component interaction flow in a connection establishment process in a management and control system according to an embodiment of this application. In a controller, after receiving a connection establishment request (1), an NCC performs DS conversion (2) on a boundary resource identifier (BRI) in the request to obtain two SNPs within the controller. Additionally, the connection establishment request may also carry partial or full routing information for a connection. The NCC sends starting and ending SNPs to a CC (3), the CC requests a RC to query a connection route (4) between the starting and ending SNPs. If routing information of the connection is carried, the routing information of the connection may also participate in routing query of the RC (e.g., as mandatory nodes). The RC returns the routing information to the CC, and the CC requests a link resource manager (LRM) (6) to select an appropriate link connection from links traversed by the route. The LRM configures a forwarding resource usage state to forwarding planes (7 and 8) through a topology access point (TAP) component. After the forwarding planes update the link resource usage state and establish a subnetwork cross connection, a connection established by the controller is successfully established. After successful establishment, the NCC responds the successful connection establishment to a client. In the controller, a link topology and resource usage information are stored in the resource database (RDB).

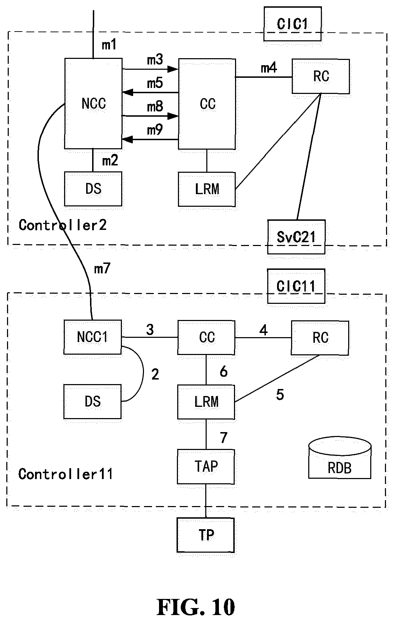

Embodiment 2: As shown in FIG. 10, FIG. 10 is a schematic diagram of an interaction flow between upper-layer controller components and lower-layer controller components in a cross-layer SDN controller architecture according to an embodiment of this application. A controller 2 and a controller 11 are upper-layer and lower-layer controllers in a client/server relationship. The controller 11 communicates with the controller 2 through client context-server context (ClientContext-ServerContext), denoted as ClC11 and SvC21 in FIG. 10 respectively. In the ClientContext, necessary parameters, protocols, resources, etc. for communication with a client-layer controller (i.e., the controller 2) are configured, including a client context identifier, a communication encryption protocol, a virtual network resource allocated to the client, etc. The virtual network resource herein may be managed as a router, meaning that a routing algorithm or protocol may be run on the virtual network resource for pathfinding. In the ServerContext, necessary parameters, protocols, resources, etc. for communication with the server-layer controller (i.e., the controller 11) are configured, including a server context identifier, a communication encryption protocol, a virtual network resource provided by the server-layer controller, etc. The virtual network resource provided by the server-layer controller is managed as a routing domain within the client-layer controller. Virtual network resources provided by a plurality of server-layer controllers, along with transmission resources directly controlled by the client-layer controller, can be integrated into a local resource pool within the client-layer controller. Based on the local resource pool, the client-layer controller may provide a network connection to a higher-layer client. A plurality of sets of ClientContext-ServerContext may be configured between the client-layer controller and the server-layer controller to satisfy different communication requirements. For example, different network resource models (IETF ACTN or ONF TAPI) may be used between different ClientContext-ServerContext, and a specific ClientContext and a specific ServerContext may be distinguished by a ClientContext identifier and a ServerContext identifier.

When the controller 2 receives a connection establishment request m1 initiated by the client, the request carries a resource identifier in a namespace agreed upon by both the controller 2 and the client. The client and the controller 2 may negotiate to determine the namespace therebetween and a resource identifier format within the namespace. When receiving the resource identifier within the namespace, the controller 2 may convert the identifier into a resource identifier within a namespace of the controller 2.

An NCC in the controller 2 converts the resource identifier in the connection establishment request m1 into a local resource identifier through a DS component (e.g., m2 interaction in FIG. 10) and then sends the local resource identifier to a CC through m3, where an m3 message carries starting and ending SNPs of a connection to be established or may also carry partial or all routing information to provide routing constraints. The CC initiates a routing query request to a RC, and the RC returns a queried route.

According to the returned route, the CC determines which domains are traversed, which may include a domain corresponding to a local resource directly controlled by the controller 2, or may also include domains provided by other controllers through the server context.

The CC establishes connections segment by segment for the returned route according to the domains traversed by the route. After these connections are established, the CC concatenates or stitches these connections together to form an end-to-end connection.

For the domain corresponding to the local resource directly controlled by the controller 2, the CC requests the LRM to allocate the local resource. A detailed flow is the same as that in the scenario where the controller directly controls the transmission resources, as described in Embodiment 1.

For the domains provided by the other controllers through the server context, the CC respectively establishes connections for the domains corresponding to the other ServerContext.

In this embodiment, the controller 2 does not directly control the transmission resources, and the domain where the local resource is located is absent from the route queried above; and the route only contains a domain provided by the controller 11 through SvC1.

The CC requests, through an m5 message, the NCC in the controller 2 to initiate a connection establishment request in the server-layer controller 11, within a namespace corresponding to the SvC21 of the controller 2, that is, within a resource range provided by the controller 2 through the SvC21.The request includes a BRI and may also include a ServerContext identifier to indicate a specific ServerContext. In this embodiment, it refers to the SvC21.

The NCC in the controller 2 determines, based on the BRI or the ServerContext, to forward the connection establishment request to the controller 11. The request carries the BRI, or may also include the ServerContext identifier.

After receiving the request, an NCC (named NCC1) in the controller 11 parses, according to the BRI, the BRI into a local resource identifier through the DS component, such as an SNP identifier. Since the ClientContext is in one-to-one correspondence with the ServerContext, a local corresponding ClientContext identifier is determined according to the ServerContext identifier, and in this embodiment, it is ClC11.Then, the NCC1 requests the CC to establish a connection within network resources allocated to the ClC11. For a specific process, reference may be made to a message interaction in Embodiment 1.

The NCC1 of the controller 11 returns a connection establishment result to the NCC of the controller 2, carries a BRI, and may also include a server context identifier. The ClientContext identifier may also be returned, and then the DS component in the controller 2 parses the ServerContext identifier in the controller 2 according to a correspondence between the ClientContext and the ServerContext.

After receiving a connection establishment success message, the NCC of the controller 2, after DS parsing, sends the connection establishment success message to the CC through an m8 message. The m8 message carries a pair of SNP points, namely, the starting and ending SNPs of the established connection, or may also carry the ServerContext identifier to indicate a domain where the pair of SNP points is located.

The CC replies to the NCC through m9, indicating that the connection establishment request from the m3 message has resulted in an established connection.

The NCC responds to the client, indicating that the connection is successfully established.

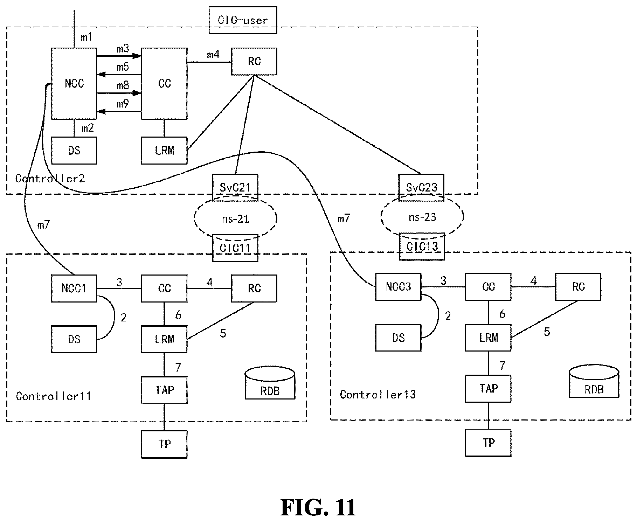

Embodiment 3: As shown in FIG. 11, FIG. 11 is a schematic diagram of an interaction flow between a plurality of server-layer controllers and an upper-layer controller in a cross-layer SDN controller architecture according to an embodiment of this application. The controller 11 and a controller 13 are lower-layer controllers of the controller 2.

The controller 11 communicates with the controller 2 through ClC11-SvC21. Necessary parameters, protocols, resources, etc. for client communication are configured in the ClC11, and necessary parameters, protocols, resources, etc. for server communication are configured in the SvC21.

The controller 13 communicates with the controller 2 through ClC13-SvC23. Necessary parameters, protocols, resources, etc. for client communication are configured in the ClC13, and necessary parameters, protocols, resources, etc. for server communication are configured in the SvC23.

Above the controller 2, there is a client interacting with the controller2 through a client context ClC-user.

When the controller 2 receives a connection establishment request m1 initiated by the client, the request carries a resource identifier in a namespace agreed upon by both the controller 2 and the client. The client and the controller 2 may negotiate to determine the namespace therebetween and a resource identifier format within the namespace. When receiving the resource identifier within the namespace, the controller 2 may convert the identifier into a resource identifier within a namespace of the controller 2.

An NCC in the controller 2 converts the resource identifier in the connection establishment request m1 into a local resource identifier through a DS component (e.g., m2 interaction in FIG. 11) and then sends the local resource identifier to a CC through m3, where an m3 message carries starting and ending SNPs of a connection to be established or may also carry partial or all routing information to provide routing constraints. The CC initiates a routing query request to a RC, and the RC returns a queried route.

According to the returned route, the CC determines which domains are traversed, which may include a domain corresponding to a local resource directly controlled by the controller 2, or may also include domains provided by other controllers through a ServerContext.

The CC establishes connections segment by segment for the returned route according to the domains traversed by the route. After these connections are established, the CC concatenates or stitches these connections together to form an end-to-end connection.

For the domain corresponding to the local resource directly controlled by the controller 2, the CC requests an LRM to allocate the local resource. A detailed flow is the same as that in the scenario where the controller directly controls the transmission resources, as described in Embodiment 1.

For the domains provided by the other controllers through the ServerContext, the CC respectively establishes connections for the domains corresponding to the other ServerContext.

In this embodiment, the controller 2 does not directly control the transmission resources, and the domain where the local resource is located is absent from the route above. The route includes a domain provided by the controller11 through the SvC21 and a domain provided by the controller 13 through the SvC23.

The CC requests, through an m5 message, the NCC in the controller 2 to initiate a connection establishment request in the server-layer controller 11, within a namespace corresponding to the SvC21 of the controller 2. The request includes a BRI and may also include a ServerContext identifier to indicate a specific ServerContext. In this embodiment, it refers to the SvC21.

For a specific process, reference may be made to the process in Embodiment 2, which will not be repeated herein.

The CC requests, through the m5 message, the NCC in the controller 2 to initiate a connection establishment request in the server-layer controller 13, within a namespace corresponding to the SvC23 of the controller 2.The request includes a BRI and may also include a ServerContext identifier to indicate a specific ServerContext. In this embodiment, it refers to the SvC23.

The NCC in the controller 2 determines, based on the BRI or the SvC23, to forward the connection establishment request to the controller13. The request carries a BRI, or may also include a ServerContext identifier.

After receiving the request, an NCC (NCC3 in FIG. 11) in the controller 13 parses, according to the BRI, the BRI into a local resource identifier through the DS component, such as an SNP identifier. Since the ClientContext is in one-to-one correspondence with the ServerContext, a local corresponding ClientContext identifier is determined according to the ServerContext identifier, and in this embodiment, it is ClC13. Then, the NCC requests the CC to establish a connection within network resources allocated to the ClC13. For a specific process, reference may be made to a message interaction in Embodiment 2.

The NCC of the controller 13 returns a connection establishment result to the NCC of the controller 2, carries a BRI, and may also include a ServerContext identifier. The ClientContext identifier may also be returned, and then the DS in the controller 2 parses the ServerContext identifier in the controller 2 according to a correspondence between the ClientContext and the ServerContext.

After receiving a connection establishment success message, the NCC of the controller 2, after DS parsing, sends the connection establishment success message to the CC through an m8 message. The m8 message carries a pair of SNP points, namely, the starting and ending SNPs of the established connection, or may also carry the ServerContext identifier to indicate a domain where the pair of SNP points is located. The m8 message may include information returned for the successful establishment of a plurality of connections. Alternatively, each of a plurality of m8 messages only includes information returned for the successful establishment of one connection.

The CC concatenates or stitches the plurality of connections together to form an end-to-end connection.

The CC replies to the NCC of the controller 2 through m9, indicating that the connection establishment request from the m3 message has resulted in an established connection.

The NCC of the controller 2 responds to the client, indicating that the connection is successfully established.

When the connection establishment of the server-layer controller fails, namely, a connection creation message returned in the m8 message indicates a failure, the CC may attempt to request the RC to recalculate a route in a domain where the connection creation fails and then initiate the connection creation again. Alternatively, the CC may also remove other successfully established connections and then attempt to request the RC to calculate an end-to-end route.

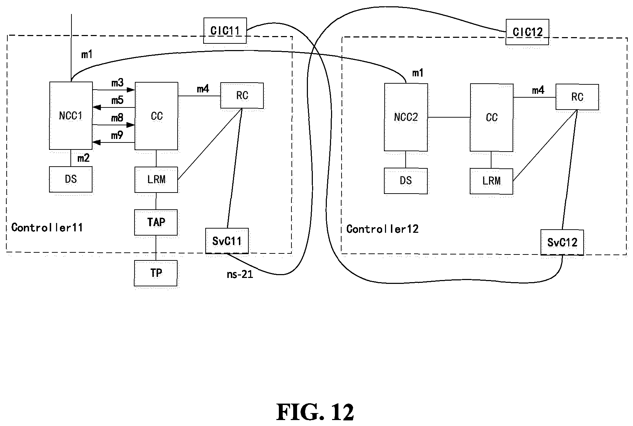

Embodiment 4: As shown in FIG. 12, FIG. 12 is a schematic diagram of a connection creation interaction flow in SDN controller peer-peer according to an embodiment of this application. An SDN controller 11 and a controller 12 are in a peer-peer relationship.

The controller 11 is connected to a server context SvC12 of the controller 12 through a client context ClC11, meaning that the controller 12 may initiate a connection establishment to the controller 11 through SvC12-ClC11.

The controller 12 is connected to a server context SvC11 of the controller 11 through a client context ClC12, meaning that the controller 11 may initiate a connection establishment to the controller 11 through SvC11-ClC12.

When the controller 11 initiates a connection establishment to the controller12 through SvC11-ClC12, the controller11 serves as the client-layer controller, and the controller12 serves as the server-layer controller. The connection establishment flow is the same as the flow in Embodiment 2, except that in this embodiment, the controller 11 plays the same role as the controller 2 in Embodiment 2, and the controller 12 plays the same role as the controller 11 in Embodiment 2.

When the controller 12 initiates a connection establishment to the controller 11 through SvC12-ClC11, the controller 12 serves as the client-layer controller, and the controller 11 serves as the server-layer controller. The connection establishment flow is the same as the flow in Embodiment 2, except that in this embodiment, the controller 12 plays the same role as the controller 2 in Embodiment 2, and the controller 11 plays the same role as the controller 11 in Embodiment 2.

Based on the connection interaction method according to any one of the above-mentioned embodiments, the following provides various embodiments of a communication device, a computer-readable storage medium, and a computer program product according to embodiments of this application.

An embodiment of this application further provides a communication device. The communication device includes a processor and a memory. There may be one or more memories and processors. The memory and the processor in the device may be connected through a bus or other methods.

As a computer-readable storage medium, the memory may be configured to store a software program, a computer-executable program, and a module, such as a program instruction/module corresponding to the connection interaction method provided in any one of the embodiments of this application. The processor implements the above-mentioned connection interaction method by running the software program, the instruction, and the module stored in the memory.

The memory may mainly include a program storage area and a data storage area. The program storage area may store an operating system, and an application program required by at least one function. Additionally, the memory may include a high-speed random access memory, and may further include a non-volatile memory, such as at least one magnetic disk storage device, a flash memory device, or other non-volatile solid-state storage devices. **In** some examples, the memory may further include memories which are remotely set relative to the processor and these remote memories may be connected to the device through a network. Examples of the network above include, but are not limited to, the Internet, intranets, a local area network, a mobile communication network, and a combination thereof.

An embodiment of this application further provides a computer-readable storage medium, having a computer-executable instruction. The computer-executable instruction is used to perform the connection interaction method provided in any one of the embodiments of this application.

An embodiment of this application further provides a computer program product, including a computer program or a computer instruction. The computer program or the computer instruction is stored in a computer-readable storage medium. A processor of a computer device reads the computer program or the computer instruction from the computer-readable storage medium, and the processor executes the computer program or the computer instruction to cause the computer device to perform the connection interaction method provided in any one of the embodiments of this application.

A system architecture and an application scenario described in the embodiments of this application are intended to more clearly illustrate the technical solutions of the embodiments of this application and do not constitute limitations on the technical solutions provided in the embodiments of this application. Those skilled in the art may understand that as the system architecture evolves and new application scenarios emerge, the technical solutions provided in the embodiments of this application are equally applicable to similar technical problems.

Those of ordinary skill in the art should understand that all or some of the steps in the method disclosed above, as well as functional modules/units in the system and the device, may be implemented as software, firmware, hardware, and a suitable combination thereof.

In hardware implementations, the division between the functional modules/units mentioned in the above description does not necessarily correspond to the division of physical components. For example, a single physical component may have a plurality of functions, or a single function or step may be performed collaboratively by several physical components. Some or all of the physical components may be implemented as software executed by a processor, such as a central processing unit, a digital signal processor, or a microprocessor, or may be implemented as hardware, or may be implemented as an integrated circuit, such as an application specific integrated circuit. The software may be distributed on a computer-readable medium, which may include a computer storage medium (or a non-transitory medium) and a communication medium (or a transitory medium).As is well known to those of ordinary skill in the art, the term "computer storage medium" includes volatile and non-volatile, removable and non-removable media implemented in any method or technology for storing information (e.g., a computer-readable instruction, a data structure, a program module, or other data). The computer storage medium includes, but is not limited to, a random access memory (RAM), a read only memory (ROM), an electrically erasable programmable read only memory (EEPROM), a flash memory, or other memory technologies, a CD-ROM, a digital versatile disk (DVD), or other optical disk storage, a magnetic cassette, a magnetic tape, a magnetic disk storage, or other magnetic storage apparatuses, or any other medium that can be configured to store desired information and that can be accessed by a computer. Further, as is commonly known to those of ordinary skill in the art, the communication medium typically includes a computer-readable instruction, a data structure, a program module, or other data in modulated data signals, such as carrier waves or other transmission mechanisms, and may include any information delivery medium.

The terms "component" "module", "system", etc., as used in this specification, are used to denote computer-related entities, hardware, firmware, combinations of hardware and software, software, or software in execution. For example, a component may be, but is not limited to, a process running on a processor, a processor, an object, an executable file, an execution thread, a program, or a computer. Through illustration, both an application running on a computing device and the computing device may be considered as components. One or more components may reside within the process or the execution thread, and a component may be located on a single computer or distributed across two or more computers. Additionally, these components may execute from various computer-readable media that store diverse data structures. Components may communicate, for example, through a local or remote process according to signals having one or more data packets (e.g., data from one component interacting with another component in a local system, a distributed system, or across a network, such as the Internet, interacting with other systems via signals).

## Claims

1. A connection interaction method, comprising:
sending, by a first controller, a connection creation request carrying a boundary resource identifier to a second controller, for causing the second controller to establish a connection according to the boundary resource identifier; and
determining a successful connection establishment when the first controller receives a connection establishment success message fed back by the second controller, wherein the connection establishment success message carries the boundary resource identifier.

2. The connection interaction method according to claim 1, wherein the first controller comprises a first connection controller and a first network call controller, the first connection controller and the first network call controller are connected communicatively, and the second controller comprises a second network call controller; and the sending, by a first controller, a connection creation request carrying a boundary resource identifier to a second controller comprises:
sending, by the first connection controller, a connection creation request carrying a boundary resource identifier to the first network call controller; and
receiving, by the first network call controller, the connection creation request, and forwarding the connection creation request to the second network call controller.

3. The connection interaction method according to claim 2, wherein the first controller further comprises a first directory service component; and the determining a successful connection establishment comprises:
sending, by the first network call controller, the boundary resource identifier in the connection establishment success message to the first directory service component;
parsing, by the first directory service component, the boundary resource identifier to obtain starting and ending resource information corresponding to starting and ending subnetwork points, and feeding the starting and ending resource information back to the first network call controller;
sending, by the first network call controller, connection creation completion information carrying the starting and ending resource information to the first connection controller; and
replying to the first network call controller by the first connection controller according to the connection creation completion information, and determining the successful connection establishment between the starting and ending subnetwork points.

4. The connection interaction method according to claim 2, wherein the first network call controller communicates with the second network call controller based on a server context.

5. The connection interaction method according to claim 4, wherein the second network call controller communicates with the first network call controller based on a client context.

6. The connection interaction method according to claim 4, wherein the connection creation request further carries first identifier information, and the first identifier information is used to represent identifier information of the server context.

7. The connection interaction method according to claim 5, wherein the connection establishment success message further carries at least one of the following:
first identifier information for representing identifier information of the server context; and
second identifier information for representing identifier information of the client context.

8. The connection interaction method according to claim 3, wherein when there are connections between the plurality of starting and ending subnetwork points, after determining a successful connection establishment, the connection interaction method further comprises:
concatenating, by the first connection controller, the connections between the plurality of starting and ending subnetwork points to form an end-to-end connection.

9. A connection interaction method, comprising:
receiving, by a second controller, a connection creation request carrying a boundary resource identifier sent by a first controller, and establishing a connection according to the boundary resource identifier; and
generating, by the second controller, a connection establishment success message carrying the boundary resource identifier and sending the connection establishment success message to the first controller for causing the first controller to determine a successful connection establishment according to the boundary resource identifier.

10. The connection interaction method according to claim 9, wherein the second controller comprises a second network call controller, the first controller comprises a first network call controller, and the receiving, by a second controller, a connection creation request carrying a boundary resource identifier sent by a first controller comprises:
receiving, by the second network call controller, a connection creation request carrying a boundary resource identifier sent by the first network call controller.

11. The connection interaction method according to claim 10, wherein the second controller further comprises a second connection controller and a second directory service component, and the second connection controller and the second directory service component are respectively connected communicatively with the second network call controller; and the establishing a connection according to the boundary resource identifier comprises:
sending, by the second network call controller, the boundary resource identifier in the connection creation request to the second directory service component;
parsing, by the second directory service component, the boundary resource identifier to obtain starting and ending resource information corresponding to starting and ending subnetwork points, and feeding the starting and ending resource information back to the second network call controller; and
sending, by the second network call controller, the starting and ending resource information to the second connection controller, for causing the second connection controller to create a connection between the starting and ending subnetwork points.

12. The connection interaction method according to claim 10, wherein the first network call controller communicates with the second network call controller based on a server context.

13. The connection interaction method according to claim 12, wherein the second network call controller communicates with the first network call controller based on a client context.

14. The connection interaction method according to claim 12, wherein the connection creation request further carries first identifier information for representing identifier information of the server context.

15. The connection interaction method according to claim 13, wherein the connection establishment success message further carries at least one of the following:
first identifier information for representing identifier information of the server context; and
second identifier information for representing identifier information of the client context.

16. A communication device, comprising:
at least one processor; and
at least one memory for storing at least one program;
wherein the at least one program, when run by the at least one processor, performs the connection interaction method according to any one of claims 1 to 15.

17. A computer-readable storage medium, having a processor-executable program stored therein, wherein the processor-executable program, when run by a processor, performs the connection interaction method according to any one of claims 1 to 15.

18. A computer program product, comprising a computer program or a computer instruction, wherein the computer program or the computer instruction is stored in a computer-readable storage medium, and a processor of a computer device reads the computer program or the computer instruction from the computer-readable storage medium and executes the computer program or the computer instruction to cause the computer device to perform the connection interaction method according to any one of claims 1 to 15.
